# EUROPÄISCHE PATENTANMELDUNG

(11) **EP 2 005 828 A2**
(43) Veröffentlichungstag der Anmeldung: **24.12.2008**
(21) Anmeldenummer: 08104479.4
(22) Anmeldetag: 19.06.2008
(51) Int. Cl.: A01N 65/00, A01P 19/00

(54) **Lockmittel für Stechmücken sowie Verfahren zur Herstellung**

(30) Priorität: 20.06.2007 AT 3832007 U
(71) Anmelder: Seidel, Bernhard, 3680 Persenbeug (AT)
(72) Erfinder: Seidel, Bernhard, 3680 Persenbeug (AT)
(74) Vertreter: Müllner, Martin

(57) **Zusammenfassung**

Ein Lockmittel zum Anlocken von wasserbrütenden Stechmücken enthält fermentierte Pflanzen bzw. Pflanzenteile aus den Gattungen Acorus, Allium, Galium, Lemna, Lythrum, Polygonum, Phragmites, Sparganium, Symphytum, Typha, Urtica, und zwar aus jenen Feuchte- bzw. Uferzonen, in welchen bevorzugt die Eiablage der Stechmücken erfolgt. Das Lockmittel ist in erster Linie für diesen Einsatzort bestimmt bzw. für eine Zielregion mit dem gewählten Pflanzenspektrum. Das Lockmittel stellt die getrocknete und vorzugsweise in Tabletten bzw. Pellets gepresste Phase des Fermentationsprozesses dar, wobei es in wasserdurchlässige Behälter, z.B. Beutel oder Netze, abgefüllt und in erster Linie zur großflächigen Applikation im Freiland in Feuchtgebieten bzw. Hochwasserschutzräumen eingesetzt wird.

## Beschreibung

### Technisches Gebiet

Die Erfindung betrifft ein Lockmittel zum Anlocken von wasserbrütenden Stechmücken (Culicidae) auf der Basis fermentierter Pflanzen bzw. Pflanzenteile.

### Stand der Technik

Stechmücken stellen eine Plage für den Menschen dar. Sie treten in feuchten Gegenden im Bereich von Wasserstellen bzw. in Aulandschaften in großen Scharen auf. Um sich vor den Stichen zu schützen, werden Repellents eingesetzt, die z.B. als pflanzliche Wirkstoffe auf der Haut aufgetragen werden und die Stechmücken vertreiben sollen. Eine ähnliche Wirkung wird auch einer für den Menschen unhörbaren Tonfrequenz zugeschrieben. Daher sind auch kleine Frequenzgeneratoren auf dem Markt, die für Stechmücken unangenehme Frequenzen abstrahlen. Schließlich gibt es Insektenfallen, die diese Lebewesen durch Licht oder Gerüche anlocken und durch Hochspannung oder mit hoher Geschwindigkeit umlaufenden Rotoren, etwa in Form von Drähten, vernichten. Gift wird auch durch Nebelanlagen oder vom Flugzeug versprüht, wenn große Flächen stechmückenfrei gehalten werden sollen.

Es ist ein Anliegen des Naturschutzes, Insektengifte zu vermeiden, weil diese die Umwelt schädigen und unabsehbare Nebenwirkungen haben können. Daher ist es eine Aufgabe der Erfindung, zur Dezimierung der Stechmücken beizutragen, indem die Stechmückenweibchen gezielt und verstärkt zu künstlichen oder natürlichen Feuchtzonen oder Wasserstellen zum Zwecke der Eiablage gelockt werden, wo dann später eine der bekannten mechanischen oder biologischen Methoden zur Vernichtung der Brut angewendet werden kann.

Zur Lenkung von Stechmückenweibchen sind einige Mittel auf Pflanzenbasis bekannt, die jedoch alle abstoßend auf die Tiere wirken und unter dem Begriff "Repellentien" zusammengefasst werden können. Ein Einsatz in Gebietsdimension ist damit nicht durchführbar. Aus Umwelt-, Natur- und Artenschutzgründen ist die Applikation dieser meist stark hydrophoben Substanzen nicht möglich. In einem aktuellen Artikel werden Lockstoffe auf Pheromonbasis bzw. typische Gerüche der artspezifischen Wirte angeführt und zitiert (in: COOK, et al. The Use of Push-Pull Strategies in Integrated Pest Management. Annu. Rev. Entomol.. 2007, Band 52, S.375-400. ), jedoch sind davon nicht Stechmücken (Culicideae) betroffen. Die angeführten Wirkstoffe müssen in komplizierten duftstoffchromatographischen Verfahren hergestellt werden.

Ferner ist es bekannt, Nutzinsekten mit Hilfe von Holzwollegebinden anzulocken. Zur Vertreibung werden diverse Pflanzeninhaltsstoffe, etwa von Acorus, eingesetzt, so etwa ein Mittel, das ein Urtica-Extrakt enthält. Allium ist zur Wundbehandlung bei Insektenstichen nützlich und durch Literatur belegt.

In der DE 69627156 Tsind eine Reihe chemischer Substanzen zum Anlocken von Insekten geoffenbart, die jedoch keine komplexen fermentierten Pflanzeninhaltsstoffe enthalten. Dabei werden wasserbrütende Mückenweibchen nicht als Zielgruppe angesprochen. Zudem sind die erwähnten Stoffe für das Freiland ungeeignet und es wäre verboten, sie etwa in Uferzonen bzw. im Garten in Regentonnen einzusetzen.

In der US 2006150473 Aist eine Stechmückenfalle beschrieben, in die die Stechmückenweibchen zur Eiablage gelockt werden. Die Falle schließt ein Wasserbecken ein und wird zur Brutzeit im Außenbereich aufgestellt. Sie wird durch Regenwasser gespeist. Ein Giftstoff für die Brut ist in der Falle gegen ein totales Ausschwemmen und auch gegen Lichteinwirkung gesichert untergebracht. Als Lockstoff wird Wasser eingesetzt, in dem frisch geschnittenes Gras mehrere Tage lang eingeweicht war. Es werden auch chemische Lockmittel bei dieser Falle herangezogen. Für eine Anwendung auf Aulandschaften im weiten Freiland sind diese Fallen nicht geeignet.

### Darstellung der Erfindung

Das Anlocken von Stechmückenweibchen mit einem Angebot zur Brut zum Zwecke der nachfolgenden Beseitigung erfolgt erfindungsgemäß mit einem Lockmittel gemäß dem Kennzeichen des Anspruchs 1. Das Lockmittel ist vollbiologisch und kann sowohl in kleinen Versuchsbehältern wie Kübelfallen oder Regentonnen, wie sie für das Sammeln von Gießwasser aufgestellt werden, aber auch in großem Maßstab, etwa bei Hochwasserschutzanlagen, in der Landschaftsplanung und der Landschaftshygiene eingesetzt werden. Die Beseitigung der angelockten Tiere wie auch der Brut sollte bei völligem Verzicht auf Insektizide, chemische Substanzen oder larvizide Wirkstoffe durch rein mechanische oder stechmückenselektive Methoden im Freiland durchgeführt werden, wozu auch hydrodynamische Parameter bzw. Maßnahmen zählen. Es ist zweckmäßig, wenn das Lockmittel gegebenenfalls in Form von gepressten Tabletten oder Pellets in einem wasserdurchlässigen Behälter, z.B. einem Beutel, einem Netz oder einer gelochten Dose, zur temporären Freilandapplikation in einem Gewässer und zur späteren Entsorgung vorgesehen ist.

Das Verfahren zur Herstellung des Lockmittels ist dadurch gekennzeichnet, dass die Pflanzen bzw. Pflanzenteile in Uferzonen gesammelt werden, in welchen bevorzugt die Eiablage durch die Gelsenweibchen erfolgt, dass die Pflanzen bzw. Pflanzenteile sodann einem mehrtätigen Fermentierungsprozess unterworfen werden und danach die Flüssigkeit ausgepresst, die feste Phase getrocknet und vorzugsweise in die Form von Tabletten oder Pellets gepresst wird. Eine Verbesserung ergibt sich, wenn zur Fermentation organische oder anorganische Substrate von Uferzonen wie Genist, Detritus, Tone oder Schlämme zugesetzt werden. Im Rahmen des Herstellungsverfahrens fällt eine flüssige Phase an, die entsorgt werden kann. Es ist jedoch zweckmäßig, wenn die ausgepresste Flüssigkeit samt den darin enthaltenen Inhalts- und Geruchsstoffen zur Anwendung als Lockmittel oder zur Beigabe zu der getrockneten Phase des Lockmittels im Einsatzgebiet gesammelt wird.

Die im Rahmen des Hauptanspruchs angeführten Pflanzen bzw. Pflanzenteile werden jenen Straten entnommen, wo auch in der Natur bevorzugt die Ablageplätze der Gelsenweibchen für ihre Eigelege aufscheinen. Das Verfahren der künstlichen Fermentation macht sich nun jene Prozesse zu nutze, die in der Natur im großen Maßstab bei Überflutungen in ähnlicher Weise ablaufen, wenn Pflanzen und deren Teile absterben und verfaulen. Bei dem nachgebildeten Fermentationsprozess entstehen Mikroorganismen, die jene für die Anlockung relevanten Stoffe und Wirkstoffgruppen bilden, die sich auf rein chemischem Wege nur sehr schwer bzw. gar nicht herstellen lassen. Eine wesentliche Erleichterung bei der Ausbringung des Lockmittels und bei der weitgehend rückstandlosen Entfernung nach Ende des gewünschten Prozesses ergibt sich durch die Verpackung, z.B. des losen getrockneten oder verpressten Materials, die gleichzeitig als (Auf)sammelbehälter dienen kann. Wird hingegen die flüssige Phase gewonnen und für eine Ausbringung vorgesehen, dann muss diese Ausbringung wegen des Fäulnisprozesses entweder bald nach Absonderung geschehen, oder es werden die Destruenten gestört (z.B. durch Gamma-Bestrahlung), wodurch eine längere Haltbarkeit der Lockgerüche gegeben ist.

### Bester Weg zur Ausführung der Erfindung

Für das erfindungsgemäße Lockmittel werden nur natürliche Pflanzenstoffe aus Pflanzen oder Pflanzenteilen verwendet, die dort eingesammelt werden, wo sich die Stechmücken aufhalten, also am besten im Einsatzgebiet des Lockmittels. Es handelst sich dabei um die Gattungen Acorus, Allium, Galium, Lemna, Lythrum, Polygonum, Phragmites, Sparganium, Symphytum, Typha und Urtica. Verholzte Teile aus dem Genist etwa von Phragmites sind nur dann zu nehmen, wenn Wurzeln bzw. wenn die oberirdischen Teile schon länger abgestorben und mazeriert sind. Regionale und auch saisonale Aspekte entscheiden die Auswahl dieser Pflanzenmaterialien, die, einmal in ausreichender Menge gesammelt, für mehrere Tage (Richtwert um 48 Stunden und weniger als 72 Stunden bei 16° bis 20° Celsius Temperatur; da dies Richtwerte sind, können diese je nach Ermessen auch verlängert werden oder die Temperatur erhöht werden) in einem Wasserbehälter untergetaucht der eigenen Fermentierung überlassen werden. Zugaben aus Substratmaterial von Uferstraten (organisch/anorganisch, z.B. Genist, Detritus, Tone, Schlämme) können diesen Fermentationsprozess schneller starten und beschleunigen. Nach der entsprechenden Zeit und bei entsprechender Temperatur wird das Wasser abgeschöpft und das Pflanzenmaterial durch eine Druckpresse geschickt, um weiteres Wasser zu entfernen (das abgeschiedene Wasser kann in bestimmten Situationen eine ähnliche Wirkung wie das feste Material haben). Anschließend wird das Material schonend getrocknet und in einem weiteren Arbeitsprozess in münzgroße Tabletten oder Pellets gepresst. Die Applikation des auf diese Weise erzeugten Produktes erfolgt in einem wasserdurchlässigen Beutel oder Behälter in einer eigens dafür hergestellten Falle, worin diese Materialien wieder in Wasser zu liegen kommen, bzw. großräumig im technischen Wasserbau im Bereich einer Hochwasser-Anschlagslinie. Die applizierten Materialien, die umgehend einen Zersetzungsgeruch sowie Substanzen erzeugen, welche durch erneutes Wasser weiter fermentiert und verstärkt werden, führen zu vermehrter Ablage von Gelseneigelegen. Als positiver Nebeneffekt in Behälterfallen wird durch die applizierten Pellets eine Verbesserung der Qualität des Wasserspeichers in Form von Nährstoffanreicherung für gärtnerische Zwecke erreicht (vgl. "Heuaufguss", "Brennnesseljauche"). Bei wasserbaulichen od.
-technischen Maßnahmen in Überflutungsgebieten kann eine Ausbringung des Materials ohne wasserdurchlässige Behältnisse erfolgen. In diesen Bereichen des Freilandes liegt das bevorzugte Anwendungsgebiet der Erfindung.

## Patentansprüche

1. Lockmittel zum Anlocken von wasserbrütenden Stechmücken (Culicidae) auf der Basis fermentierter Pflanzen bzw. Pflanzenteile, **dadurch gekennzeichnet, dass** das Mittel Pflanzen bzw. Pflanzenteile oder einen Pflanzenauszug aus den Gattungen Acorus, Allium, Galium, Lemna, Lythrum, Polygonum, Phragmites, Sparganium, Symphytum, Typha, Urtica enthält und dass die Pflanzenteile aus jenen Feuchte- bzw. Uferzonen stammen, in welchen bevorzugt die Eiablage der Stechmückenweibchen erfolgt und die in erster Linie dem Einsatzort bzw. dem Pflanzenspektrum der Zielregion des Lockmittels entsprechen.

2. Lockmittel nach Anspruch 1, **dadurch gekennzeichnet, dass** es, gegebenenfalls in Form von gepressten Tabletten oder Pellets, in einem wasserdurchlässigen Behälter, z.B. einem Beutel, einem Netz oder einer gelochten Dose, zur temporären Freilandapplikation in einem Gewässer und zur späteren Entsorgung vorgesehen ist.

3. Verfahren zur Herstellung eines Lockmittels nach Anspruch 1, **dadurch gekennzeichnet, dass** die Pflanzen bzw. Pflanzenteile in Uferzonen gesammelt werden, in welchen bevorzugt die Eiablage durch die Gelsenweibchen erfolgt, dass die Pflanzen bzw. Pflanzenteile sodann einem mehrtätigen Fermentierungsprozess unterworfen werden und danach die Flüssigkeit ausgepresst, die feste Phase getrocknet und vorzugsweise in die Form von Tabletten oder Pellets gepresst wird.

4. Verfahren nach Anspruch 3, **dadurch gekennzeichnet, dass** zur Fermentation organische oder anorganische Substrate von Uferzonen, wie Genist, Detritus, Tone oder Schlämme, zugesetzt werden.

5. Verfahren nach Anspruch 2, **dadurch gekennzeichnet, dass** die ausgepresste Flüssigkeit samt den darin enthaltenen Inhalts- und Geruchsstoffen zur Anwendung als Lockmittel oder zur Beigabe zu der getrockneten Phase des Lockmittels im Einsatzgebiet gesammelt wird.
